Europäisches Patentamt

European Patent Office

Office européen des brevets

(19)

(11) Veröffentlichungsnummer: **0 114 590**
**B1**

(12) **EUROPÄISCHE PATENTSCHRIFT**

(45) Veröffentlichungstag der Patentschrift: **19.09.90**

(21) Anmeldenummer: **83890213.8**

(22) Anmeldetag: **22.11.83**

(51) Int. Cl.⁵: **F 04 B 21/08,** F 16 J 15/16,
F 16 J 15/24

(54) **Einrichtung zum Abdichten von Hochdruckeinrichtungen.**

(30) Priorität: **26.11.82 AT 4309/82**

(43) Veröffentlichungstag der Anmeldung:
**01.08.84 Patentblatt 84/31**

(45) Bekanntmachung des Hinweises auf die
Patenterteilung:
**19.09.90 Patentblatt 90/38**

(84) Benannte Vertragsstaaten:
**BE CH DE FR GB IT LI LU NL SE**

(56) Entgegenhaltungen:
**keine**

(73) Patentinhaber: **BÖHLER Gesellschaft m.b.H.
Elisabethstrasse 12
A-1010 Wien (AT)**

(72) Erfinder: **Schier, Walter
Dr. Theodor Körner Strasse 23
A-8600 Bruck/Mur (AT)**
Erfinder: **Retschnik, Gerald
A-8712 Niklasdorf 396 (AT)**

Courier Press, Leamington Spa, England.

**Beschreibung**

Die Erfindung betrifft eine Einrichtung zum Abdichten von Hochdruckeinrichtungen, insbesondere zum Abdichten von oszillierend bewegten Plungern bzw. Verdrängerkolben von Hochdruck-Pumpen oder von rotierenden Wellen von Hochdruckapparaten.

Es sind Hochdruck-Dichteinrichtungen für Verdrängerkolben von Kolbenpumpen bekannt, die durch eine metallische Hülse gebildet sind, die den Verdrängerkolben in einer Pumpenkopfbohrung mit Abstand zu der Wand der Pumpenkopfbohrung umgibt und am druckabwärtigen Ende einen Führungsflansch aufweist, der in einer im Vergleich zur pumpenkopfbohrung erweiterten Einstichbohrung des Pumpenkopfes liegt.

Bei hohen Drücken im Bereich von mehreren tausend bar wie sie insbesondere bei Pumpen für Flüssigkeits-Strahl-Schneideinrichtungen notwendig sind- hat sich die bekannte Hochdruck-Spalt-Dichtung als nicht ausreichend erwiesen; die Spaltbüchse weist unterschiedliche Materialstärken auf, so daß es insbesondere bei stark schwankenden Druckbelastungen zu Materialbrüchen kommen kann. Außerdem sind die Standzeiten nicht zufriedenstellend.

Aus der DE-B 2336118 ist eine Hochdruck-Kolbenabdichteinrichtung bekannt, die auf Basis einer Labyrinthdichtung wirkt und wobei die Labyrinthdichtung durch mindestens einen Dichtungskörper gebildet ist, der als auf dem Kolben schwimmend angeordnete Dichtbüchse mit einem Labyrinthbereich ausgebildet ist. Neben der aufwendigen Herstellung des Labyrinthes weist diese Dichtung den Nachteil größerer Baulänge auf, auch der Verschleiß ist infolge der großen Zahl der am Kolben anliegenden Labyrinthspitzen relativ hoch.

Weiters sind Hochdruckdichtungen für Verdrängerkolben von Kolbenpumpen und Druckübersetzern bekannt, bei denen eine Abdichtung durch einen Weichstoff-Dichtungsring, der durch O-Ringverspannung satt am bewegten Plunger anliegt, erfolgt.

In der US-A 3003797 ist eine Hochdruck-Plungerdichtung mit einer Mehrzahl von koaxial aneinanderliegend angeordneten, V-förmigen Ring-Querschnitt aufweisenden ringförmigen Dichelementen, sogenannten Chevron-Ringen bekannt, welche beiseitig von entsprechende Form aufweisenden Endelementen gehalten werden. Die Dichtelemente dieser erhebliche Baulänge aufweisenden Dichteinrichtung liegen über ihre konusartigen Flächen aneinander, wobei diese infolge der V-Form jeweils einen scharfen "Knick" aufweisen, womit zwischen den Dichtelementen praktisch ein Formschluß gegeben ist, welcher ein gegenseitiges Gleiten der Konusflächen aneinander und damit radiale Ausgleichsbewegungen verhindert.

Bei den in Rede stehenden Drücken sind die Standzeiten der bekanntgewordenen Abdichtungen nicht zufriedenstellend, da der Verschleiß und damit die Spaltbildung zwischen Plunger und Abstützring der Dichtelemente, bei welchen radiale Ausgleichsbewegungen behindert sind, relativ hoch ist.

Der Erfindung liegt die Aufgabe zugrunde, eine Hochdruckdichtung der eingangs genannten Art zu schaffen, welche sich insbesondere auch für nichtschmierende Flüssigkeiten eignet, weiters eine geringe Zahl von Einzelteilen umfaßt, eine zuverlässige Dichtwirkung aufweist, möglichst verschleißarm arbeitet, hohe Standzeiten besitzt und die Gefahr von Materialbrüchen ausschließt.

Es wurde eine Hochdruckdichteinrichtung entwickelt, welche bei verbesserter Dichtwirkung wesentlich geringere Baulängen aufweisen kann als die bekannten Dichtungen und bei welcher der in der abzudichtenden Apparatur herrschende Druck selbst die Dichtwirkung erhöht.

Gegenstand der Erfindung ist demnach eine Einrichtung zum Abdichten von kolben-oder stangenartigen beweglichen Hochdruckeinrichtungen, vorzugsweise oszillierend bewegten Plungern bzw. Kolben von Hochdruckpumpen, insbesondere für flüssige Medien, oder von rotierenden Wellen von Hochdruckapparaturen, gekennzeichnet durch einen druckraumseitig, insbes. mittels Vorspannringes mit im wesentlichen radial zur Achse des Plungers oder der Welle hin gerichteten Kräften beaufschlagbaren, vorzugsweise aus plastisch und/oder elastisch verformbaren Material gefertigten Ring, der an seinem dem abzudichtenden Druckraum abgekehrten Ende eine im wesentlichen konkav-konische Ausnehmung aufweist, in welche konkav-konische Ausnehmung ein im wesentlichen der Form dieser Ausnehmung entsprechend geformter von der Oberfläche des Plungers bis zur Wandung der Bohrung des Hohlzylinders sich erstreckender konvex-konischer Fortsatz einer an der dem Druckraum abgewandten Seite des Ringes angeordneten Hülse ragt, deren konische Fläche teilweise an der Wandung der Ausnehmung des Ringes anliegt, wobei der äußere Teil der konischen Fläche der Hülse einen vorzugsweise dreieckigen Querschnitt aufweisenden Stützring abstützt, welcher seinerseits an der dem Druckraum zugewandten Seite an der äußeren Teilfläche des Ringes anliegt.

Mit der neuen Abdichteinrichtung, bei welcher der auch zum Plunger hin kraftbeaufschlagte Ring vornehmlich Dichtfunktion und insbesondere Druck- bzw. Kraftübertragungsfunktion ausübt, und der Hülse insbesondere Dicht- und Plunger- bzw. Wellen-Führungsfunktion zukommt, ist es möglich, die Leckage, die vor allem von der Spaltdicke abhängt, auch bei hohen Drücken auf ein tolerierbares Maß oder sogar auf Null zu senken, wenn die Werkstoffkombination von Ring, Hülse und Plunger einen Null-Spalt zuläßt, ohne ein Verreiben nach sich zu ziehen. Ein besonderer Vorteil der ineinandergreifenden Konizität von Ausnehmung am Ring und durchgehende Mantelfläche ohne V-Knick od. dgl. aufweisenden Fortsatz der Hülse ist der, daß sich die an der Abdicht-und Führungshülse ausbildende Dichtlippe unbehindert nach dem Plunger bzw.

der Welle zentrieren kann und auch geringfügige Bewegung der Hülse durch die vom Fortsatz ausgebildete Dichtlippe ausgeglichen werden kann, so daß immer die äußerst gering zu haltende Spalt' dicke aufrecherhalten bleibt. Es übernimmt also die Hülse einen wesentlichen Anteil der Dichtfunktion.

Es hat sich gezeigt, daß bei Einbau der neuen Hochdruck-Abdichteinrichtung die Standzeiten von Hochdruck-Apparaturen wesentlich erhöht werden konnten.

Beim Druckhub des Plungers wird in dem sich im Druckraum und im schmalen Spalt zwischen Plunger und Bohrungswand bzw. Innenfläche einer in der Bohrung eingesetzten Zwischenhülse befindlichen Medium an der dem Druckraum zugekehrten Seite des Dichtringes ein Druck aufgebaut, der auf den Ring eine vom Druckraum, im wesentlichen axial gerichtete Kraft ausübt. Die konkav-konisch geformte Wandung der Ausnehmung an der der Hülse zugekehrten Seite des Ringes und der dreieckigen Querschnitt aufweisende Stützring werden axial gegen die der Ausnehmung entsprechend geformten Mantelfläche des Fortsatzes dieser Hülse gepreßt und infolge der schrägen Ausbildung der Flächen, von denen die Mantelfläche des Fortsatzes durchgehend ist, womit das Gleiten der zusammenwirkenden Flächen und damit ein axiales Aufschieben des Ringes und des Stützringes auf die Hülse nicht behindert werden, wird die vom Ring auf die Hülse übertragene Axialkraft im Bereich des Fortsatzes der Hülse immer teilweise in eine radial nach innen, zur Plungerachse, hin gerichtete Kraft-Komponente umgewandelt, durch deren Wirkung insbesondere der Randbereich des konvex-konisch ausgebildeten Hülsenfortsatzes gegen die vom ihm umgebene Oberfläche des vorbeigleitenden Plungers oder der Welle gepreßt wird. In den genannten Randbereichen des Fortsatzes der Hülse bildet sich auf diese Weise eine Art Dichtlippe aus, der Spalt zwischen Hülsen-Hohlraum und Plunger- bzw. Wellenoberfläche wird selbsttätig auf praktisch Null gestellt. Auf diese Weise hat diese Hülse nicht nur die Funktion, zur Führung des Plungers zu dienen, sondern übernimmt zumindest im Bereich ihres Fortsatzes, insbesondere in dessen Randbereich, im wesentlichen zusätzlich Dichtfunktion.

Es sei an dieser Stelle bemerkt, daß die beschriebene Dichtwirkung auch bei drehenden Wellen erreicht wird, dort befindet sich der abzudichtende Hohlraum praktisch immer unter Druck, sodaß die auf den Ring wirkende Axialkraft durchgehend besteht und diese Kraft wird mittels der erfindungsgemäß ausgebildeten Einrichtung zur Erhöhung der Abdichtwirkung durch Einbeziehung der Hülse als Dichtorgan herangezogen. Bei der erfindungsgemäßen Einrichtung wird infolge der Übernahme von Teilen der Dichtfunktion durch die Hülse eine wesentliche Schonung des Ringes gegenüber Verschleißerscheinungen erreicht.

Bei einem Plunger wird nach Bewegungsumkehr, also beim Saughub, in der Bohrung des Hochdruckraumes der Druck abgebaut. Die axiale Preßkraft des Ringes auf den Hülsenfortsatz und damit dessen radiale Krafteinwirkung auf die Plungeroberfläche und damit weiters auch die angeführten Lippen-Dichtwirkung sinken ab und es öffnet sich die beim Druckhub ausgebildete Dichtlippe am Fortsatz der Hülse wieder. Beim Saughub wird also die Oberfläche des Plungers dann kaum berührt und ist daher nur äußerst geringem Verschleiß ausgesetzt.

Es kann vorgesehen sein, daß der Ring und die Hülse in einem zu deren Aufnahme vorgesehenen erweiterten Bereich der vom Plunger oder der Welle durchsetzten Bohrung der Hochdruckeinrichtung angeordnet ist. Wenn die Bohrung der Hochdruckeinrichtung so ausgebildet ist, daß in ihr ohne Anordnung einer Führungs-Zwischenhülse direkt der Plunger bzw. die Welle gleitend gelagert ist, dann ist in dem dem Hochdruckraum abgekehrten, nach außen gerichteten Bereich der Bohrung die genannte Erweiterung vorgesehen, in welcher die erfindungsgemäße Abdichteinrichtung angeordnet ist. Bei einer solchen Erweiterung ist der Übergang von der Bohrung zu dem erweiteren Bereich der Bohrung nach Art einer Stufe ausgebildet, an welche dann der Ring anschließt und mittels der Hülse in Position gehalten wird, welche ihrerseits mittels einer Preßbüchse, die lösbar an der Außenseite der Hochdruckeinrichtung angeordnet ist, in Lage gehalten und gegen diese Stufe gedrückt wird. Bevorzugt ist jedoch eine Ausführungsform, bei der eine Bohrung einheitlichen Durchmessers vorgesehen ist, in welcher eine Führungs-Zwischenhülse sitzt, in welcher der durch sie geführte Plunger bzw. Welle gelagert ist. In diesem Fall ist wieder an der dem Druckraum abgekehrten Seite der Hochdruckeinrichtung ein Bereich vorgesehen, in den sich diese Führungs- oder Zwischenhülse nicht hineinerstreckt, wobei in dem freigehaltenen Bereich der Bohrung Platz für die Anordnung der erfindungsgemäßen Einrichtung vorhanden ist.

Es ist bevorzugt, wenn der Ring gegen den Druckraum hin in einem Abstand zu einer diesem Druckraum abgekehrten, vorzugsweise ebenen, Stirnfläche der den Plunger bzw. Welle umgebenden, in der Bohrung der Hochdruckeinrichtung sitzenden Zwischenhülse angeordnet ist. Vorteil dieser, insbesondere auch das Auswechseln nach Verschleiß begünstigenden, Ausbildungsform ist insbesondere, daß in der- wie der Druckraum — hohem Druck ausgesetzten Bohrung keine abrupten Querschnitts-und Materialstärken-Änderungen vorhanden sind, wodurch die Festigkeit der gesamten Einrichtung erhöht ist.

Der gesamte Abstand zwischen Führungsbüchsen-Stirnfläche und Ring kann z.B. 1 mm oder weniger betragen. Infolge des dadurch freien Raumes kann unter Druck stehendes Medium von dort aus eine axial nach außen gerichtete Kraft auf den Ring ausüben und preßt ihn fest gegen den konvexkonischen Fortsatz der Hülse.

Für die zuletzt beschriebene Ausführungsform mit einer Zwischenhülse in der Bohrung hat sich eine Ausführungs-Variante als vorteilhaft erwiesen, bei der die mit ihrem Fortsatz in die Ausnehmung des Ringes ragende Hülse mittels einer, vorzugsweise ihrerseits durch ein lösbares Halterungselement gehaltenen, Druckbüchse in Lage gehalten, und gegebenenfalls mit im wesentlichen axial zum Druckraum hin gerichteter Kraft in Richtung auf die Stirnfläche der in der Bohrung angeordneten Zwischenhülse gedrückt ist. Mittels der erwähnten Druckbüchse kann bei dieser Anordnung eine 5 präzise abgestimmte Gegen-Pressung des Ringes und des Stützringes an die Wand der Bohrung einerseits und des Hülsenfortsatzes an die Oberfläche des Plungers bzw. der Welle andererseits erreicht werden.

Bevorzugt betragen der Öffnungswinke α der konkav-konischen Ausnehmung am Ring und der Öffnungswinkel ß des entsprechend geformten, im wesentlichen in die Ausnehmung passenden Fortsatzes der Hülse 30 bis 60°, insbesondere liegen sie im Bereich von etwa 45°.

Es kann nun weiters vorgesehen sein, daß die Ausnehmung und der Fortsatz bzw. jeweils deren ineinanderpassende Bereiche gleiche Öffnungswinkel α und β aufweisen. Damit wird eine gleichmäßige Übertragung der Axialkraft vom Dichtungsring auf den Fortsatz der Hülse erreicht, und es ist der Bereich der "Lippen"-Abdichtwirkung längenmäßig erweitert.

Gemäß einer anderen Variante ist vorgesehen, daß der Öffnungswinkel α der konkav-konischen Ausnehmung des Ringes größer ist als der Öffnungswinkel β des im wesentlichen entsprechend geformten Fortsatzes der Hülse. Der Unterschied beträgt vorzugsweise 1 bis 5°. Bei dieser unterschiedlichen Neigung der aneinander stossenden Flächen von Ring-Ausnehmung und Hülsen-Fortsatz wird erreicht, daß der dem Ring zugekehrte vordere Teil des Fortsatzes mit wesentlich höherer Kraft an die Plungeroberfläche angepreßt wird, als die sich anschliessenden Bereiche dieses Fortsatzes und des Stützringes, wobei ebenfalls ein stetiger Abfall der Kraftwirkung nach außen eintritt. Besonders geeignet ist die hier angeführte Variante mit verschiedenen Öffnungswinkeln für die Abdichtung von drehenden Wellen. Das Material, aus dem derRing vorteilhaft ist, ist durch Kunststoff gebildet, besonders bevorzugt sind Polymere auf Basis von Tetrafluorethylen. Es können aber auch andere Polymere auf Basis gegebenenfalls fluorierter Polyalkylene und insbesondere solche aus einem PTFE-Compoundwerkstoff Verwendung finden. Kunststoffe, insbesondere fluorierte Polyethylene, haben den Vorteil eines sehr geringen Reibungskoeffizienten, sodaß auch bei relativ hohen Anpreßkräften auf den abzudichtenden Plunger bzw. die abzudichtende Welle dennoch der Verschleiß des Ringes der erfindungsgemäßen Einrichtung äußert gering gehalten werden kann.

Insbesondere, um einerseits gegen die Wandung der Bohrung bzw. eines erweiterten Bereiches der Bohrung der Hochdruckeinrichtung hin eine hochdrucksichere Abdichtung zu erreichen und andererseits auch, um dem Ring eine Stütze zu geben, ist es günstig, wenn auf der äußeren Teilfläche des Ringes ein die konkav-konische Kontur von dessen Ausnehmung im wesentlichen bis zur Außenkontur des Ringes fortsetzender, vorzugsweise aus Metall, insbesondere aus Stahl, gefertigter Stützring, mit im wesentlichen dreieckigem Querschnitt und gegebenenfalls mit einer dem Druckraum zugewandten konkav-konischen Ausnehmung angeordnet ist, Dieser Stützring dient insbesondere auch dazu, ein Auskriechen des Ringes bei eventuell auftretenden extrem hohen Druckbeanspruchungen sicher zu verhindern.

Vorteilhaft ist es weiters, wenn der Ring an seiner em Druckraum zugekehrten Seite einen Bereich geringeren Durchmessers aufweist, der von einem Vorspannring, insbesondere O-Ring, umschlossen und mit einer im wesentlichen radial zur Achse des Plungers oder der Welle gerichteten Kraft beaufschlagt ist. Der genannte Bereich geringeren Durchmessers dient zur Aufnahme des Vorspannringes, der seinerseits dafür Sorge trägt, daß die Innenfläche des Ringes an der Oberfläche des abzudichtenden Kolbens bzw. Plungers bzw. der abzudichtenden Welle infolge der vom Vorspannring her wirkenden radialen Kräfte anliegt.

Bei einer besonders bevorzugten Form des Ringes in der soeben beschriebenen Ausführungsform ist vorgesehen, daß der Bereich geringeren Durchmessers am Ring im wesentlichen kegelförmig in den Bereich des Ringes mit im wesentlichen dem Innendurchmesser der Bohrung der Hochdruckeinrichtung selbst entsprechenden Außendurchmesser übergehend ausgebildet ist, und gegebenenfalls der Bereich dieses Überganges von einem, vorzugsweise aus Metall gefertigten, Stützring umschlossen ist. Der derartig ausgebildete Übergang von dem Bereich geringen Außendurchmessers zum Bereich des Ringes mit einem dem Durchmesser der Bohrung der Hochdruckeinrichtung im wesentlichen entsprechenden Außendurchmesser hat den Vorteil, daß kein abrupter Übergang in der Materialstärke des Ringes vorhanden ist. Der soeben beschriebene, vorzugsweise aus Metall, insbesondere aus Stahl, gefertigte Stützring kann dazu dienen, ein Auskriechen des Ringes zu vermeiden; er kann aber, wie die Praxis gezeigt hat, auch weggelassen werden.

An dieser Stelle sei erwähnt, daß die vorgesehenen Stützringe, die auch als Kammerungsringe bezeichnet werden, beispielsweise in der AT-B-296700 beschrieben sind.

Was den Werkstoff für die Hülse betrifft, so ist sie, insbesondere aus Gründen der geforderten mechanischen Festigkeit und Verschleißarmut bevorzugt aus Stahl oder einer Kupfer-Beryllium-Legierung gefertigt.

Vorteilhaft ist ihre Länge gleich dem oder größer als ihr Außendurchmesser. Ist sie zu kurz gebaut, kann sie unter Umständen ihrer Führungsfunktion nicht optimal nachkommen.

Soll zusätzlich zur oben beschriebenen "Lippen"-Dichtwirkung auch eine gute Dichtung nach außen erreicht werden, so kann es vorteilhaft sein, wenn die Hülse an ihrer dem Plunger bzw. der Welle zugekehrten Innenfläche im wesentlichen quer zur Hülsenachse verlaufende, vorzugsweise etwa halbkreis- oder U-förmigen Querschnitt aufweisende, Rillen aufweist.

Zur Außenseite hin ist die erfindungsgemäße Dichteinrichtung vorteilhafter-weise so ausgebildet, daß die sie in Lage haltende Preßbüchse an ihrer dem Plunger bzw. der Welle zugekehrten Innenfläche eine, vorzugsweise durch mindestens eine Dichtlippe und/oder mindestens einen O-Ring gebildete, Dichtung aufweist. Diese Dichtung an der Innenseite der Preßbüchse erhöht zusätzlich die Leck-Sicherheit der Apparatur.

Vorteilhaft kann weiters, insbesondere um eine gute Schmierung an den Flächen zwischen Preßbüchse und Plunger bzw. Welle zu erreichen, vorgesehen sein, daß in der Preßbüchse an deren dem plunger oder der Welle zugekehrter Innenfläche mündende Kanäle für die Zufuhr eines Schmiermittels, und gegebenenfalls für die Abfuhr von Leckage, angeordnet sind. Die Kanäle für die Abführung von Leckage dienen dazu, das austretende Medium gezielt abzuleiten.

Solche Zuführkanäle für Schmiermittel können auch in der vorher genau beschriebenen Hülse vorgesehen sein.

Insgesamt sei zu der erfindungsgemäßen Abdichtung noch ergänzend ausgeführt, daß sie es ermöglicht, bei erhöhter Abdichtwirkung die Abnützung des Ringes wesentlich zu vermindern und somit die Standzeit der Dichteinrichtung um ein Vielfaches im Vergleich mit bisher bekannten Dichtungen zu steigern. Infolge der an sich kurzen Baulänge der Dichteinrichtung kommt es auch zu keiner wesentlichen Erwärmung beim Betrieb des Plungers bzw. der Welle, da eine gute Wärmeabfuhr durch das Medium gewährleistet ist.

In einer Prüfanordnung wurde eine erfindungsgemäß ausgebildete, einen mit Vorspannring versehenen Ring und Hülse aufweisende, Dicht-Einrichtung in einer doppelt wirkenden für eine Hochdruckschneideinrichtung vorgesehenen Plungerpumpe für 4000 bar Wasser erprobt.

Dabei waren folgende Werkstoffe eingesetzt:
Plunger: Hartmetall
Hülse: Kupfer-Beryllium
Ring: Polytetrafluorethylen (PTFE)-Compound
Stützringe: rostfreier Stahl

Es wurde gefunden, daß sogar Wasserdrücke im Bereich bis 5000 bar mit dieser Dichtungsausführung zu beherrschen sind.

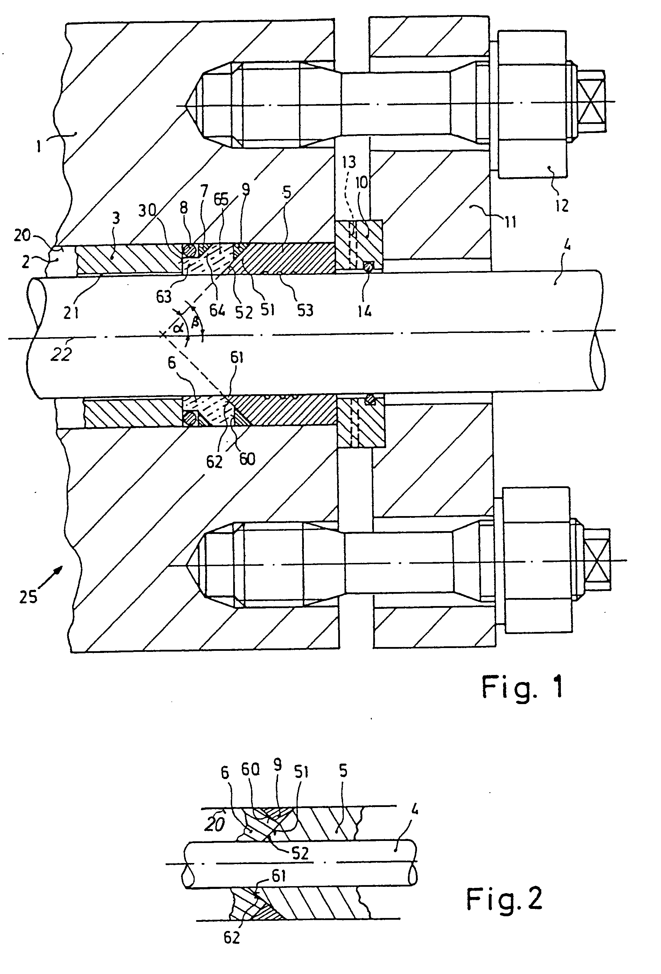

Anhand der Zeichnung sei die erfindungsgemäße Hochdruckdichtung näher erläutert. Die Fig. 1 zeigt einen axialen Längsschnitt durch eine erfindungsgemäße Dichteinrichtung.

Fig. 2 erläutert anhand einer einfachen Schnitt-Skizze eine in der Praxis bewährte besondere Ausbildungsform eines Stützringes der erfindungsgemäßen Dichteinrichtung.

Bei der dargestellten Ausführungsform, die sich z.B. für einen Druckübersetzer zum Hochdruck-Flüssigkeits-Schneiden von Gegenständen eignet, ist im Hochdruckzylinder 1 der Hochdruckeinrichtung 25 ein Hohlraum, insbesondere eine Bohrung 2 vorgesehen, in welche eine Zwischenhülse 3 an der Wandung 20 der Bohrung anliegend eingesetzt ist. Diese Zwischenhülse 3 umgibt den in ihr gelagerten, sich oszillierend bewegenden Plunger 4, der beispielsweise aus Hartmetall gefertigt ist, und vorteilhafterweise eine Oberflächenrauheit im Bereich von 0,0l mm aufweist. An der Zwischenhülse 3 bzw. an deren dem Druckraum abgekehrten Seite bzw. Stirnfläche 30 anliegend ist der Dichtungs — ring 6 angeordnet, in dessen dem Druckraum abgekehrten Endenbereich die konkav- konischen Ausnehmung 61 angeordnet ist, in welche der konvexkonische Fortsatz 51 der Hülse 5 hineinragt und mit seiner konischen Fläche bzw. Wandung 52 an der Wandung 62 des Ringes 6 anliegt.

Diese Hülse 5 dient gleichzeitig zur Lagerung für den Plunger 4. Der Ring 6 weist einen an die Stirnfläche 30 der Zwischenhülse 3 anliegenden Bereich 63 geringeren Außendurchmesser auf, der über einen kegelförmigen Bereich 64 in den Bereich 65 größeren, mit dem Durchmesser der Bohrung 2 übereinstimmender Außendurchmesser aufweisenden Bereich des Ringes 6 übergeht. Den Bereich 63 kleineren Durchmessers umschließend ist ein Vorspannring, im gezeigten Fall ein D-Ring B angeordnet, welcher den Ring 6 in seinem Bereich 63 mit einer radial zur Achse des Plungers 4 hin gerichteten Kraft beaufschlagt, sodaß eine Abdichtung zwischen Ringinnenfläche und Plunger gegeben ist.

Anliegend an den kegelförmigen Übergangsteil 64 ist der ein Auskriechen des Ringes 6 verhindernde Stütz- bzw. Kammerungsring 7 angeordnet. Auf der Ringstirnfläche 60 des Ringes 6 ist ebenfalls ein dreieckigen Querschnitt aufweisender Stützring 9 angeordnet, welcher im wesentlichen die Kontur der konkav-konischen Ausnehmung 61 in der Ringstirnfläche 60 des Ringes 6 bis zu dessen Außenkanten fortsetzt.

Beim Druckhub des Plungers 4 wird in dem sich im Druckraum und im schmalen Spalt 21 zwischen Plunger und Innenfläche der in der Bohrung 2 eingesetzten Zwischenhülse 3 befindlichen Medium an der dem Druckraum zugekehrten Seite des Ringes 6 ein Druck aufgebaut, der auf den Ring 6 eine vom Druckraum weg axial gerichtete Kraft ausübt. Die kegelförmige Wandung 62 der konkav-konischen Ausnehmung 61 in der der Hülse 5 zugekehrten Stirnfläche des Ringes 6 wird axial gegen die der Ausnehmung entsprechend geformte Mantelfläche 52 des Fortsatzes 51 dieser Hülse 5 gepreßt und infolge der schrägen Ausbildung der beiden Wandungen 62, 52 wird die vom Ring 6 auf die Hülse 5 übertragene Axialkraft im Bereich des Fortsatzes 51 teilweise in eine radial nach innen zum Plunger 4 hingerichtete Kraft-Komponente umgewandelt ,durch deren Wirkung insbesondere der Randbereich des konvex-konisch ausgebildeten Fortsatzes 51 fest gegen die von ihm umgebene Oberfläche des vorbeigleitenden Plungers 4 gepreßt wird. In den genannten Randbereichen des Fortsatzes 51 der Hülse 5 bildet sich auf diese Weise eine Art "Dichtlippe" aus, der Spalt zwischen Hülsen-Hohlraum und Plunger- bzw. Wellenoberfläche wird selbsttätig auf praktisch Null gestellt. Ergänzt sei, daß Ausnehmung 61 und Fortsatz 51 zumindest im wesentlichen die gleiche Achse 22 haben wider Plunger.

Nach außen hin ist die Hülse, welche in der gezeigten Anordnung an ihrer Innenseite zusätzlich noch ein durch Nuten 53 gebildetes Dicht-Labyrinth aufweist, von einer Preßbüchse l0 in Lage gehalten, welche ihrerseits in einer entsprechend geformten Ausnehmung eines über Verbindungselemente 12 lösbar mit dem Hochdruckzylinder 1 verbundenen, etwa stopfbüchsenbrillenartig ausgebildeten Halterungselement 11 sitzend angeordnet ist. Die Preßbüchse 10 selbst weist an ihrer dem Plunger 4 zugekehrten Seite einen in einer Aufnahme angeordneten D-Dichtring 14 auf.

Außerdem sind in der Büchse Kanäle 13 für die Zuführung eines Schmiermittels (gegebenenfalls auch für welche für die Abführung von Leckage) angeordnet, wodurch der Verschleiß von Plunger 4 und Hülse 5 vermindert wird.

Der in Fig. 2 gezeigte, den Plunger 4 umgebende Ring 6 ist mit einer konkav-konischen Ausnehmung 61 gebildet, wobei die konkav-konische Kontur bis zur Wandung der Bohrung 20 durch den Stützring 9 fortgesetzt wird. Der einen dreieckigen Querschnitt aufweisende Stützring 9 besitzt eine dem Druckraum zugewandte konkav-konische Ausnehmung bzw. Innenfläche, welche an der äusseren Teil fläch 60 des Ringes 6 anliegt und diesen an seinem dem Druckraum abgekehrten Ende umschließt.

Die konkav-konische Ausnehmung 61 am Ring 6, deren Kontur vom Stützring 9 fortgesetzt ist, und der in sie ragende Fortsatz 51 der Hülse 5 wirken in praktisch der gleichen Weise unter Ausbildung einer hochwirksamen verschleißarmen Dichtung zusammmen, wie schon vorher zur Fig. 1 erläutert, wobei infolge der durchgehenden Ausbildung der Mantelfläche 52 der Hülse 5 ein unbehindertes axiales "Aufschieben" der Wandung 62 der Ringausnehmung 61 und des Stützringes 9 auf den Fortsatz 51 der Hülse 5 und damit immer sichergestelltes Anliegen von deren Dichtlippe an den plunger 4 gewährleistet ist.

## Patentansprüche

1. Einrichtung zum Abdichten von kolben-oder stangenartigen beweglichen Hochdruckeinrichtungen, vorzugsweise oszillierend bewegten Plungern (4) bzw. Kolben von Hochdruckpumpen, insbesondere für flüssige Medien. oder von rotierenden Wellen von Hochdruckapparaturen, gekennzeichnet durch einen druckraumseitig, insbesondere mittels Vorspannringes (8) mit im wesentlichen radial zur Achse des Plungers (22) oder der Welle hin gerichteten Kräften beaufschlagbaren,. vorzugsweise aus plastisch und/ oder elastisch verformbarem Material gefertigen Ring (6), der an seinem dem abzudichtenden Druckraum abgekehrten Ende (65) eine im wesentlichen konkav-konische Ausnehmung (61) aufweist, in welche konkav-konische Ausnehmung (61) ein im wesentlichen der Form dieser Ausnehmung (61) entsprechend geformter von der Oberfläche des Plungers (4) bis zur Wandung (20) der Bohrung (2) des Hohlzylinders (1) sich erstreckender konvex-konischer Fortsatz (51) einer an der dem Druckraum abgewandten Seite des Ringes (6) angeordneten Hülse (5) ragt, deren konische Fläche (52) teilweise an der Wandung (62) der Ausnehmung (61) des Ringes (6) anliegt, wobei der äußere Teil der konischen Fläche (52) der Hülse (5) einen vorzugsweise dreieckigen Querschnitt aufweisenden Stützring (9) abstützt, welcher seinerseits mit der dem Druckraum zugewandten Seite an der äußeren Teilfläche (60) des Ringes (6) anliegt.

2. Einrichtung zum Abdichten nach Anspruch 1, dadurch gekennzeichnet, daß der Ring (6) gegen den Druckraum hin im Abstand zu einer diesem Druckraum abgekehrten, vorzugsweise ebenen, Stirnfläche (30) einer den Plunger (4) bzw. die Welle umgebenden, in der Bohrung (2) der Hochdruckeinrichtung sitzenden Zwischenhuse (3) angeordnet ist.

3. Einrichtung zum Abdichten nach Anspruch 1 oder 2, dadurch gekennzeichnet, daß die mit ihrem Fortsatz (51) in die Ausnehmung (61) des Ringes (6) ragende Hülse (5) mittels einer, vorzugsweise ihrerseits durch ein lösbares Halterungselement (11) gehaltenen, Druckbüchse bzw. Preßbüchse (10) in Lage gehalten, und gegebenenfalls mit im wesentlichen axial zum Druckraum hin gerichteter Kraft in Richtung auf die Stirnfläche (30) der in der Bohrung (2) angeordneten Zwischenhülse (3) gedrückt ist.

4. Einrichtung zum Abdichten nach einem der Ansprüche 1 bis 3, dadurch gekennzeichnet, daß der, vorzugsweise 30 ° bis 60°, insbesodere etwa 45°, betragende Öffnungswinkel α der konkav-konischen Ausnehmung (61) des Ringes (6) und der Öffnungswinkel β des der Ausnehmung (61) entsprechend geformten Fortsatzes (51) der Hülse (5) miteinander übereinstimmen.

5. Einrichtung zum Abdichten nach einem der Ansprüche 1 bis 3, dadurch gekennzeichnet, daß der, vorzugsweise 30° bis 60°, insbesondere etwa 45°, betragende Öffnungswinkel α der konkav-koniscen Ausnehmung (61) des Ringes (6), vorzugsweise um 1 bis 5, größer ist als der Öffnungwinkel β des der Ausnehmung (51) entsprechend geformten Fortsatzes (51) der Hülse (5).

6. Einrichtung zum Abdichten nach einem der Ansprüche 1 bis 5, dadurch gekennzeichnet, daß der Ring (6) aus einem Kunststoff, vorzugsweise aus einem Polymeren auf Tetrafluorethylenbasis gefergtigt ist.

7. Einrichtung zum Abdichten nach einem der Ansprüche 1 bis 6, dadurch gekennzeichnet, daß auf der äußeren Teilfläche (60) des Ringes (6) ein die konkav-konische Kontur von dessen Ausnehmung (61) im wesentlichen bis zur Außenkontur des Ringes (6) fortsetzender, vorzugsweise aus Metall gefertigter, Stützring (9) mit im wesentlichen dreieckigem Querschnitt und mit einer dem Druckraum zugewandten konkav-konischen Ausnehmung angeordnet ist.

8. Einrichtung zum Abdichten nach einem der Ansprüche 1 bis 7, dadurch gekennzeichnet, daß der Ring (6) an seiner dem Druckraum zugekehrten Seite einen Bereich (63) geringeren Durchmesses aufweist, der von einem Vorspannring, insbesondere O-Ring (8), umschlossen und mit einer im wesentlichen radial zur Achse des Plungers (4) oder der Welle gerichteten Kraft beaufschlagt ist.

9. Einrichtung zum Abdichten nach Anspruch 8, dadurch gekennzeichnet, daß der Bereich (63), geringeren Durchmessers am Ring (6) im wesentlichen kegelförmig in den Bereich (65) des Ringes (6) mit im wesentlichen dem Innendurchmesser der Bohrung (20), der Hochdruckeinrichtung (25) selbst entsprechendem Außendurchmesser übergehend ausgebildet ist, und gegebenenfalls der Bereich (64) dieses Überganges von einem, vorzugsweise aus Metall gefertigten, Stützring (7) umschlossen ist.

10. Einrichtung zum Abdichten nach einem der Ansprüche 1 bis 9, dadurch gekennzeichnet, daß die Hülse (5) aus Stahl oder einer Kupfer- Beryllium-Legierung gefertigt ist.

11. Einrichtung zum Abdichten nach einem der Ansprüche 1 bis 10, dadurch gekennzeichnet, daß die Hülse (5) eine Länge aufweist, die gleich dem oder größer als deren Außendurchmesser ist.

12. Einrichtung zum Abdichten nach einem der Ansprüche 1 bis 11, dadurch gekennzeichnet, daß die Hülse (5) an ihrer dem Plunger (4) bzw. der Welle zugekehrten Innenfläche im wesentlichen quer zur Hülsenachse verlaufende, vorzugsweise etwa halbkreis- oder U-förmigen Querschnitt aufweisende, Rillen (53) aufweist.

13. Einrichtung zum Abdichten nach einem der Ansprüche 1 bis 12, dadurch gekennzeichnet, daß die sie in Lage haltende Preßbüchse (10) an ihrer dem Plunger (4) bzw. der Welle zugekehrten Innenfläche eine, vorzugsweise durch mindestens eine Dichtlippe und/oder mindestens einen O-Ring (14) gebildete, Dichtung aufweist.

14. Einrichtung zum Abdichten nach einem der Ansprüche 1 bis 13, dadurch gekennzeichnet, daß in der Preßbüchse (10) an deren dem Plunger (4) oder der Welle zugekehrter Innenfläche mündende Kanäle (13) für die Zufuhr eines Schmiermittels, und gegebenenfalls die Abfuhr von Lekkage, angeordnet sind.

## Revendications

1. Garniture d'étanchéité pour appareils à haute pression mobiles du type à piston ou à tige, en particulier pour l'étanchage de plongeurs (4) ou pistons à mouvement oscillant de pompes à haute pression, en particulier pour fluides liquides, ou d'arbres rotatifs d'appareils à haute pression, caractérisée par une bague (6), du côté de la chambre à pression, réalisée, de préférence, en un matériau plastique et/ou déformable élastiquement, en particulier pouvant être resserrée à l'aide d'une bague de prétension (8) par des forces orientées sensiblement radialement à l'axe (22) du plongeur ou de l'arbre, présentant, à son extrémité (65) opposée à la chambre à pression à rendre étanche, un évidement (61) sensiblement conique concave, dans lequel évidement conique concave (61) pénètre une extension conique convexe (51), s'étendant de la surface du plongeur (4) à la paroi (20) de l'alésage (2) du cylindre creux (1), sensiblement de forme correspondant à la forme de cet évidement (61), d'un manchon (5) disposé du côté de la bague (6) opposée à la chambre de pression, dont la face conique (52) vient partiellement en contact avec la paroi (62) de l'évidement (61) de la bague (6), la partie extérieure de la face conique (52) du manchon (5) supportant une bague d'appui (9) présentant, de préférence, une section triangulaire, qui, à son tour, vient en contact, du côté tourné vers la chambre de pression, avec la face partielle extérieure (60) de la bague (6).

2. Garniture d'étanchéité suivant la revendication 1, caractérisée en ce que la bague (6) est disposée contre la chambre à pression, à distance d'une face frontale (30), de préférence plane, opposée à cette chambre à pression, d'un manchon intermédiaire (3) entourant le plongeur (4) ou l'arbre, situé dans l'alésage (2) de la garniture à haute pression.

3. Garniture d'étanchéité suivant la revendication 1 ou 2, caractérisée en ce que le manchon (5) pénétrant, par son extension (51), dans l'évidement (61) de la bague (6), est maintenu en position à l'aide d'une douille à pression (10) maintenue, à son tour, de préférence, par un élément de fixation (11) amovible, et, éventuellement, poussé, par une force dirigée sensiblement axialement par rapport à la chambre à pression, en direction de la face frontale (30) du manchon intermédiaire (3) disposé dans l'alésage (2).

4. Garniture d'étanchéité suivant l'une des revendications 1 à 3, caractérisée en ce que l'angle d'ouverture α, de 30 à 60°, en particulier d'environ 45°, de l'évidement conique concave (61) de la bague (6) et l'angle d'ouverture β de l'extension (51) du manchon (5) de forme correspondant à l'évidement (61) coïncident l'un avec l'autre.

5. Garniture d'étanchéité suivant l'une des revendications 1 à 3, caractérisée en ce que l'angle d'ouverture α, de 30 à 60°, en particulier d'environ 45°, de l'évidement conique concave (61) de la bague (6) est supérieur, de préférence de 1 à 5°, à l'angle d'ouverture β de l'extension (51) du manchon (5) de forme correspondant à l'évidement (61).

6. Garniture d'étanchéité suivant l'une des revendications 1 à 5, caractérisée en ce que la bague (6) est réalisée en un matériau synthétique, de préférence en un polymère à base de tétrafluoréthylène.

7. Garniture d'étanchéité suivant l'une des revendications 1 à 6, caractérisée en ce qu'il est disposé, sur la face partielle extérieure (60) de la bague (6), une bague d'appui (9) réalisée de préférence en métal, prolongeant le contour conique concave de son évidement (61) sensiblement jusqu'au contour extérieur de la bague (6), à section sensiblement triangulaire et avec un évidement conique concave tourné vers la chambre à pression.

8. Garniture d'étanchéité suivant l'une des revendications 1 à 7, caractérisée en ce que la bague (6) présente, de son côté tourné vers la chambre à pression, une zone (63) à faible diamètre entourée d'une bague de prétension, en particulier un joint torique (8), et est resserrée par une force dirigée sensiblement radialement par rapport à l'axe du plongeur (4) ou de l'arbre.

9. Garniture d'étanchéité suivant la revendication 8, caractérisée en ce que la zone (63) à faible diamètre de la bague (6) est transitoirement de forme sensiblement conique dans la zone (65) de la bague (6) à diamètre extérieur correspondant sensiblement au diamètre intérieur de l'alésage (20) de la garniture à haute pression (25) proprement-dite et que, éventuellement, la zone (64) de ce passage est entourée d'une bague d'appui (7) réalisée, de préférence, en métal.

10. Garniture d'étanchéité suivant l'une des revendications 1 à 9, caractérisée en ce que le manchon (5) est réalisé en acier ou un alliage de cuivre-béryllium.

11. Garniture d'étanchéité suivant l'une des revendications 1 à 10, caractérisée en ce que le manchon (5) présente une longueur qui est égale ou supérieure à son diamètre extérieur.

12. Garniture d'étanchéité suivant l'une des revendications 1 à 11, caractérisée en ce que le manchon (5) présente, sur sa face intérieure tournée vers le plongeur (4) ou l'arbre, des rainures (53) s'étendant sensiblement transversalement à l'axe du manchon, de préférence présentant une section environ semi-circulaire ou en forme de U.

13. Garniture d'étanchéité suivant l'une des revendications 1 à 12, caractérisée en ce que la douille de pression (10) qui la maintient en position présente, à sa face intérieure tournée vers le plongeur (4) ou l'arbre, un joint d'étanchéité formé, de préférence, par au moins une lèvre d'étanchéité et/ou au moins un joint torique (14).

14. Garniture d'étanchéité suivant l'une des revendications 1 à 13, caractérisée en ce qu'il est disposé, dans la douille de pression (10), des caniveaux (13), aboutissant à sa face intérieure tournée vers le plongeur (4) ou l'arbre, pour l'amenée d'un lubrifiant et, éventuellement, l'évacuation de fuites.

## Claims

1. Apparatus for sealing piston-like or rod-like movable high-pressure apparatus, preferably movable oscillating plungers (4) or pistons of high-pressure pumps, in particular for liquid media, or of rotating shafts of high-pressure apparatus, characterised by a ring (6), preferably made of plastically and/or elastically deformable material, on the pressure space side, which ring in particular can be acted on by means of a pre- stressing ring (8) by forces directed substantially radially towards the axis (22) of the plunger or the shaft, which ring (6) has at its end (65) remote from the pressure space which is to be sealed a substantially concave-conical recess (61), into which concave-conical recess (61) protrudes a convex-conical extension (51) of a sleeve (5) located on the side of the ring (6) remote from the pressure space, which extension is shaped substantially corresponding to the shape of this recess (61) and extends from the surface of the plunger (4) to the wall (20) of the bore (2) of the hollow cylinder (1), the conical face (52) of which sleeve partly lies against the wall (62) of the recess (61) of the ring (6), with the outer part of the conical face (52) of the sleeve (5) supporting a supporting ring (9) having a preferably triangular cross-section, which ring (9) itself with its side facing the pressure space lies against the outer partial surface (60) of the ring (6).

2. Apparatus for sealing according to Claim 1, characterised in that the ring (6) towards the pressure space is located at a distance from a preferably planar end face (30) of an intermediate sleeve (3) surrounding the plunger (4) or the shaft and located in the bore (2) of the high-pressure apparatus remote from this pressure space.

3. Apparatus for sealing according to Claim 1 or 2, characterised in that the sleeve (5) which protrudes with its extension (51) into the recess (61) of the ring (6) is held in place by means of a pressure bushing or pressing bushing (10) which itself is preferably held by a detachable holding element (11), and optionally is pressed towards the end face (30) of the intermediate sleeve (3) located in the bore (2) with force directed substantially axially towards the pressure space.

4. Apparatus for sealing according to one of Claims 1 to 3, characterised in that the generating angle α of the concave-conical recess (61) of the ring (6), which is preferably 30° to 60°, in particular about 45°, and the generating angle β of the extension (51) of the sleeve (5) which is shaped corresponding to the recess (61) are identical.

5. Apparatus for sealing according to one of Claims 1 to 3, characterised in that the generating angle α of the concave-conical recess (61) of the ring (6), which is preferably 30° to 60°, in particular about 45°, is preferably greater by 1 to 5° than the generating angle β of the extension (51) of the sleeve (5) which is shaped corresponding to the recess (61).

6. Apparatus for sealing according to one of Claims 1 to 5, characterised in that the ring (6) is made of a plastic, preferably of a polymer on the basis of tetrafluoroethylene.

7. Apparatus for sealing according to one of Claims 1 to 6, characterised in that a supporting ring (9) which is preferably made of metal, having a substantially triangular cross-section and with a concave-conical recess facing the pressure space, and which extends the concave-conical contour of the recess (61) of the ring substantially to the outer contour of the ring (6) is located on the outer partial surface (60) of the ring (6).

8. Apparatus for sealing according to one of Claims 1 to 7, characterised in that the ring (6) on its side facing the pressure space has a region (63) of smaller diameter, which is surrounded by a pre-stressing ring, in particular an O-ring (8), and is acted on by a force directed substantially radially to the axis of the plunger (4) or of the shaft.

9. Apparatus for sealing according to Claim 8, characterised in that the region (63) of smaller diameter on the ring (6) is designed to merge substantially conically into the region (65) of the ring (6) with an external diameter substantially corresponding to the internal diameter of the bore (20) of the high-pressure apparatus (25) itself, and optionally the region (64) of this transition is surrounded by a supporting ring (7), preferably made of metal.

10. Apparatus for sealing according to one of Claims 1 to 9, characterised in that the sleeve (5) is made of steel or a copper/beryllium alloy.

11. Apparatus for sealing according to one of Claims 1 to 10, characterised in that the sleeve (5) has a length which is equal to or greater than its external diameter.

12. Apparatus for sealing according to one of Claims 1 to 11, characterised in that the sleeve (5) has grooves (53) running substantially transversely to the sleeve axis and preferably having an approximately semicircular or U-shaped cross-section on its inner face facing the plunger (4) or the shaft.

13. Apparatus for sealing according to one of Claims 1 to 12, characterised in that the pressing bushing (10) holding it in place has a seal, preferably formed by at least one sealing lip and/ or at least one 0-ring (14) on its inner face facing the plunger (4) or the shaft.

14. Apparatus for sealing according to one of Claims 1 to 13, characterised in that in the pressing bushing (10) there are located channels (13) for supplying a lubricant, and if necessary for removing leakage, which open onto the inner face thereof facing the plunger (4) or the shaft.

Fig. 1

Fig. 2